# EUROPEAN PATENT APPLICATION

(11) **EP 4 804 014 A1**
(43) Date of publication of application: **09.09.2026**
(21) Application number: 26163070.1
(22) Date of filing: 06.03.2026
(51) Int. Cl.: G06F 8/38, G06N 3/0475, G06F 8/41

(54) **GENERATING CODE-DEFINED VISUAL CONTENT IN COMPUTING SYSTEMS USING GENERATIVE ARTIFICAL INTELLIGENCE MODELS**

(30) Priority: 07.03.2025 US 202519073935
(71) Applicant: Figma, Inc., San Francisco, CA 94102 (US)
(72) Inventor: KERN, Alexander Simon, San Francisco, 94102 (US); BURKE, Darragh John, San Francisco, 94102 (US); GIANNATTASIO, Thomas Joseph, San Francisco, 94102 (US); DRAPER, William Reid, San Francisco, 94102 (US)
(74) Representative: Morrall, Jonathan Ian McLachlan

(57) **Abstract**

Embodiments of the present disclosure provide techniques for generating code defining visual content in a design environment. An example method includes receiving an input prompt describing a behavior to be implemented by a visual asset included on a canvas in a design environment. An intermediate representation of the visual asset is generated. A code artifact is generated using a generative artificial intelligence mode based on the intermediate representation of the visual asset and the input prompt.

## Description

### BACKGROUND

### Field of the Various Embodiments

Embodiments of the present disclosure relate generally to graphic design tools and, more specifically, to techniques for generating code-defined visual content in a graphic design tool.

### Description of the Related Art

Graphic design tools generally allow for the creation of visual assets in a design environment. These visual assets may be defined, for example, as vector assets defined in terms of mathematical relationships between different components or raster assets defined in terms of absolute pixel locations. In some cases, a visual asset may include one or more containers, defined in the vector space, in which raster assets (e.g., images) can be inserted. A visual asset may include any number of visual components, and a visual asset may be defined in terms of relative positioning or other spatial relationships between visual components in the visual asset.

In many workflows, the process of designing a visual asset may be decoupled from the process of generating code used to implement the visual asset in an executable environment outside of the design environment. Because of this decoupling, a visual asset may be designed in a design environment and coded in a coding environment. However, the design environment and the coding environment may not support the same features, and thus, the design created in the design environment may not be replicable in the coding environment. In other words, the design of the visual asset created in the design environment may serve as a guide for the creation of the visual asset in the coding environment, and the appearance of the visual asset created in the coding environment may not match the appearance of the visual asset in the design environment.

As the foregoing illustrates, what is needed are more effective techniques for implementing visual content in executable code.

### SUMMARY

One embodiment of the present disclosure provides techniques for generating code defining visual content in a design environment. An example method includes receiving an input prompt describing a behavior to be implemented by a visual asset included on a canvas in a design environment. An intermediate representation of the visual asset is generated. A code artifact is generated using a generative artificial intelligence mode based on the intermediate representation of the visual asset and the input prompt.

One technical advantage of the disclosed techniques relative to the prior art is that the disclosed techniques allow for visual assets to be rapidly defined in code that can be used and reused across design environments. By using a generative model to generate code implementing a visual asset based on the design of the visual asset and a description of the desired functionality of the visual asset, code-defined visual assets can be generated with fidelity to both the visual design of the asset and the desired functionality. Further, because generative artificial intelligence models are generally able to generate working code from an input prompt, embodiments presented herein may allow for the rapid generation of functional code-defined visual assets that comply with the syntactic rules of a language in which the code-defined visual assets are written and accurately execute the defined functionality. Thus, embodiments of the present disclosure may provide for the creation of code-defined visual assets without incurring the computational expense of repeated compilation and debugging sessions used to verify that code defining a visual asset is functional. Further, because designing and coding a visual asset may be more tightly coupled, embodiments presented herein may allow for the creation of visual assets in code that replicate the design of a visual asset instead of approximating a visual design created in a design space.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computer system configured to implement one or more aspects of various embodiments of the present disclosure.
Figure 2 illustrates a design environment in which visual components are created and maintained as code-defined assets, according to some embodiments.
Figure 3 is a flow diagram of method steps for modifying code-defined visual assets in a design environment based on an external code asset, according to some embodiments.
Figure 4 illustrates a network computing system to implement an interactive graphic application platform, according to some embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

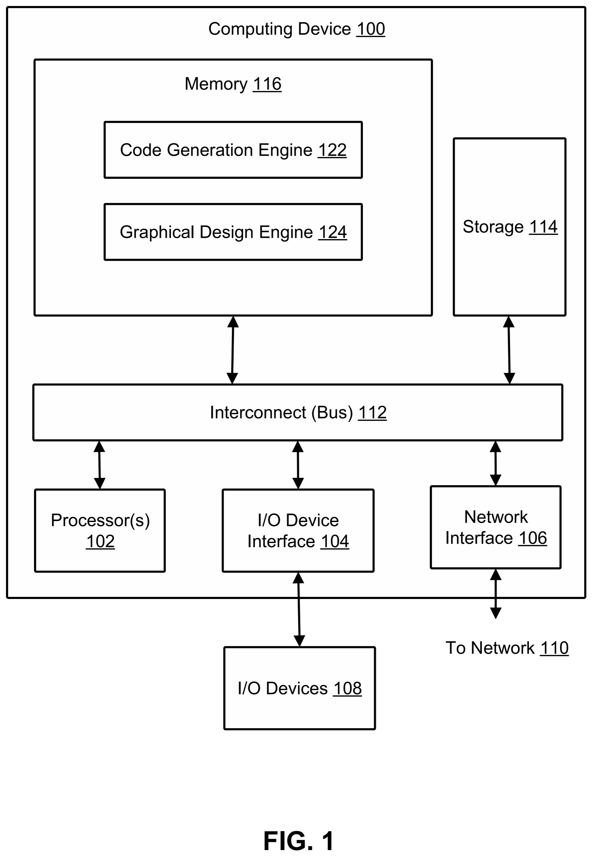

Figure 1 illustrates a computing device 100 configured to implement one or more aspects of various embodiments of the present invention. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run a code generation engine 122 and a graphical design engine 124 that reside in a memory 116.

It is noted that the computing device described herein is illustrative and that any other technically feasible configurations fall within the scope of the present disclosure. For example, multiple instances of code generation engine 122 or graphical design engine 124 could execute on a set of nodes in a distributed and/or cloud computing system to implement the functionality of computing device 100. In another example, code generation engine 122 or graphical design engine 124 could execute on various sets of hardware, types of devices, or environments to adapt code generation engine 122 or graphical design engine 124 to different use cases or applications. In a third example, code generation engine 122 or graphical design engine 124 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, a microphone, and so forth, as well as devices capable of providing output, such as a display device or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (Wi-Fi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Code generation engine 122 and graphical design engine 124 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including code generation engine 122 or graphical design engine 124.

### Example Generative Artificial Intelligence Models

Generative artificial intelligence models used to generate code-defined visual assets may be language models, such as large language models (LLMs), vision language models (VLMs), multi-modal language models (MMLMs), or the like. These models may be capable of understanding, summarizing, translating, and/or otherwise generating text (e.g., natural language text, code, etc.), images, video, computer aided design (CAD) assets, OMNIVERSE and/or METAVERSE file information (e.g., in USD format, such as OpenUSD), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/VLMs/MMLMs/etc. may be implemented for summarizing textual data, analyzing and extracting insights from data (e.g., textual, image, video, etc.), and generating new text/image/video/etc. in user-specified styles, tones, and/or formats. The LLMs/VLMs/MMLMs/etc. of the present disclosure may be used exclusively for text processing, in embodiments, whereas in other embodiments, multi-modal LLMs may be implemented to accept, understand, and/or generate text and/or other types of content like images, audio, 2D and/or 3D data (e.g., **in** USD formats), and/or video. For example, vision language models (VLMs), or more generally multi-modal language models (MMLMs), may be implemented to accept image, video, audio, textual, 3D design (e.g., CAD), and/or other inputs data types and/or to generate or output image, video, audio, textual, 3D design, and/or other output data types.

Various types of LLMs/VLMs/MMLMs/etc. architectures may be implemented in various embodiments. For example, different architectures may be implemented that use different techniques for understanding and generating outputs - such as text, audio, video, image, 2D and/or 3D design or asset data, etc. In some embodiments, LLMs/VLMs/MMLMs/etc. architectures such as recurrent neural networks (RNNs) or long short-term memory networks (LSTMs) may be used, while in other embodiments transformer architectures - such as those that rely on self-attention and/or cross-attention (e.g., between contextual data and textual data) mechanisms - may be used to understand and recognize relationships between words or tokens and/or contextual data (e.g., other text, video, image, design data, USD, etc.). One or more generative processing pipelines that include LLMs/VLMs/MMLMs/etc. may also include one or more diffusion block(s) (e.g., denoisers). The LLMs/VLMs/MMLMs/etc. of the present disclosure may include encoder and/or decoder block(s). For example, discriminative or encoder-only models like BERT (Bidirectional Encoder Representations from Transformers) may be implemented for tasks that involve language comprehension such as classification, sentiment analysis, question answering, and named entity recognition. As another example, generative or decoder-only models like GPT (Generative Pretrained Transformer) may be implemented for tasks that involve language and content generation such as text completion, story generation, and dialogue generation. LLMs/VLMs/MMLMs/etc. that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the LLMs/VLMs/MMLMs/etc.

In various embodiments, the LLMs/VLMs/MMLMs/etc. may be trained using unsupervised learning, in which an LLMs/VLMs/MMLMs/etc. learns patterns from large amounts of unlabeled text/audio/video/image/design/USD/etc. data. Due to the extensive training, in embodiments, the models may not require task-specific or domain-specific training. LLMs/VLMs/MMLMs/etc. that have undergone extensive pre-training on vast amounts of unlabeled data may be referred to as foundation models and may be adept at a variety of tasks like question-answering, summarization, filling in missing information, translation, image/video/design/USD/data generation. Some LLMs/VLMs/MMLMs/etc. may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/VLMs/MMLMs/etc. of the present disclosure may be implemented using various model alignment techniques. For example, in some embodiments, guardrails may be implemented to identify improper or undesired inputs (e.g., prompts) and/or outputs of the models. In doing so, the system may use the guardrails and/or other model alignment techniques to either prevent a particular undesired input from being processed using the LLMs/VLMs/MMLMs/etc., and/or preventing the output or presentation (e.g., display, audio output, etc.) of information generating using the LLMs/VLMs/MMLMs/etc. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/implementation. As a result, the LLMs/VLMs/MMLMs/etc. of the present disclosure may be less likely to output language/text/audio/video/design data/USD data/etc. that may be offensive, vulgar, improper, unsafe, out of domain, and/or otherwise undesired for the particular application/implementation.

In some embodiments, the LLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3rd party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s) and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

In some embodiments, multiple language models (e.g., LLMs/VLMs/MMLMs/etc., multiple instances of the same language model, and/or multiple prompts provided to the same language model or instance of the same language model may be implemented, executed, or accessed (e.g., using one or more plug-ins, user interfaces, APIs, databases, data stores, repositories, etc.) to provide output responsive to the same query, or responsive to separate portions of a query. In at least one embodiment, multiple language models e.g., language models with different architectures, language models trained on different (e.g. updated) corpuses of data may be provided with the same input query and prompt (e.g., set of constraints, conditioners, etc.). In one or more embodiments, the language models may be different versions of the same foundation model. In one or more embodiments, at least one language model may be instantiated as multiple agents - e.g., more than one prompt may be provided to constrain, direct, or otherwise influence a style, a content, or a character, etc., of the output provided. In one or more example and non-limiting embodiments, the same language model may be asked to provide output corresponding to a different role, perspective, character, or having a different base of knowledge, etc. - as defined by a supplied prompt.

### Example Generation of Code-Defined Visual Assets in a Design Environment Using Generative Artificial Intelligence Models

In graphical design software, such as that implemented by the graphical design engine 124 illustrated in Figure 1, visual assets, such as user interface components in a user interface under design in the graphical design engine 124, may be rendered and designed. A visual asset, as used herein, may be a group of visual components rendered in a user interface. Visual assets may be defined *a priori* (e.g., as code templates or pre-designed code-defined visual components in the graphical design engine 124) or may be designed by a user of the graphical design engine 124 and implemented in code.

To allow for rapid and accurate generation of code-defined visual assets, embodiments described herein use generative artificial intelligence models to convert a design generated in a design environment into code implementing the design and the desired functionality associated with the design. Generally, a prompt describing the functionality of a visual asset and an image of the visual asset can be used as an input into a generative artificial intelligence model. The generative artificial intelligence model, which may be a model trained to generate functional source code according to a prompt describing the functionality of a visual asset, can generate source code for the visual asset that includes the desired functionality and event triggers or action handlers that cause the source code to perform the desired functionality. By doing so, embodiments described herein may allow for rapid development of functional user interfaces based on code-defined visual assets. Further, because designing the visual appearance of a visual asset and implementing the functionality of the visual asset may be tightly coupled, embodiments presented herein may accelerate the process of building working user interfaces and may allow the design of such user interfaces to implement a desired visual appearance instead of merely approximating a desired visual appearance.

Still further, embodiments presented herein may allow for code generation models used in generating code-defined visual assets to be iteratively trained based on user feedback within a design environment. For example, user feedback about whether the source code generated by a generative model is used as-is or further modified to conform with user intent as expressed by the input prompt, as well as the modifications themselves, may be used to refine the generative artificial intelligence model. Such refinement may allow the generative artificial model to learn from real-world user interaction data and improve the quality of the source code generated by the generative artificial intelligence model.

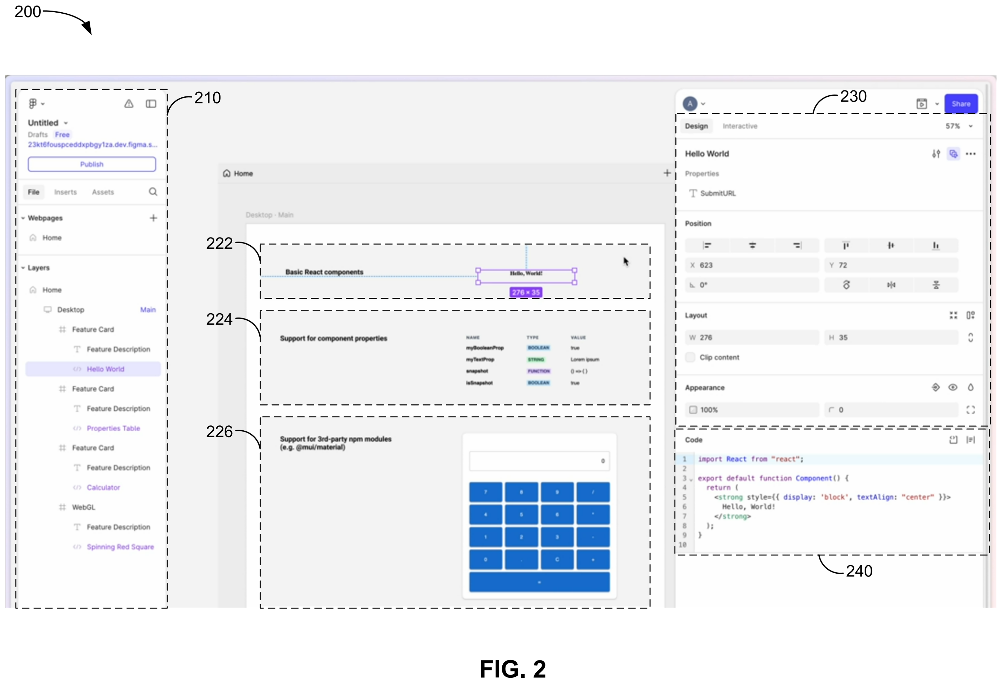

Figure 2 illustrates a design environment 200 in which visual components are created and maintained as code-defined assets, according to some embodiments. The design environment 200 may be rendered by one or both of code generation engine 122 and/or graphical design engine 124 illustrated in Figure 1.

To allow for visual assets to be defined as code constructs and tightly couple the appearance of visual assets in a design environment 200 with the underlying implementing code, embodiments presented herein may allow for the creation of code implementing a visual asset and the use of these code-defined visual assets as modifiable objects within the design environment 200. As illustrated, the design environment 200 includes a layout panel 210 illustrating one or more layers associated with visual components in a design, a canvas 205 on which instances of code-defined visual assets are displayed, a control panel 230, and a code panel 240.

Visual assets 222, 224, and 226 (amongst others, not illustrated in Figure 2) generally represent instances of different code-defined visual assets. For example, the visual assets 222 and 224 illustrate various examples of visual assets for rendering non-interactive text in a graphical display. The visual asset 226, meanwhile, illustrates an example of an interactive visual asset (in this example, a calculator, though it should be recognized that the illustration of a calculator is but an example, and any type of interactive visual asset may be contemplated) in which interaction with buttons modifies the text displayed in a text field and/or triggers the execution of operations that modify the text displayed in the text field (e.g., triggers the execution of a mathematical operation, the result of which is displayed in the text field). Each of the visual assets 222, 224, and 226 may be contained in a code layer in the canvas 205 and listed in the layout panel 210 to allow for the modification of the properties and/or functionality of the visual assets independently.

Generally, an external code asset may define the appearance of a visual asset (e.g., one of the visual assets 222, 224, 226 illustrated in Figure 2) and/or the functionality of the visual asset. The appearance of the visual asset may be configured, for example, via code-defined properties (e.g., size, foreground and background color, transparency, rotation, border size and style, etc.) that can be modified by a user in the design environment. The functionality of the visual asset may be configured, for example, via triggers, actions, or the like. Generally, triggers may correspond to activity for which a code-defined visual asset emits an event notification that can be used by other code-defined visual assets to trigger execution of other code. Actions, meanwhile, may correspond to activity based on which code is executed (e.g., interaction with a button in a user interface causing code to be executed).

For example, the external code asset associated with the visual asset 222, which implements a static text block, may include code that, when executed, returns instructions for rendering the static text block in a graphical user interface. Because the visual asset 222 does not include interactivity features, the code associated with the visual asset, illustrated in code panel 240, may not include action handlers, triggers, or other code executed when a user interacts with the visual asset. The visual design properties associated with the visual asset may be modifiable via changes in various design parameters displayed in the control panel 230 and/or via direct manipulation of the visual asset on the canvas 205 (e.g., using in-canvas controls rendered on a visual asset). As illustrated, the parameters for a static text block may include position-related parameters (e.g., location, text orientation, element orientation, padding, etc.), size-related parameters, and the like. In some embodiments, the external code asset associated with the visual asset 222 may include *a priori* defined values for one or more parameters illustrated in the control panel 230. These parameters may be changed by a user in the design environment 200 by modifying the values of these parameters in the control panel 230 or modifying the appearance of the visual asset 222 on canvas 205. Similarly, the external code asset associated with the visual asset 224 may include code that returns instructions for rendering multiple static text blocks in a graphical user interface, each of which may have different properties.

The visual asset 226, which includes various interactivity properties, may be associated with an external code asset that defines both the appearance and functionality of the visual asset 226. The code defining the visual asset 226 may include code for rendering the visual asset 226 in a graphical user interface and code for performing various functions based on interaction with visual components in the visual asset 226. For example, the code may include code that emits triggers that result in modifying the text displayed in a text box or otherwise modify a state of the visual asset 226. The code defining the visual asset 226 may further include action handling code that causes specified operations to be performed within the graphical user interface. For example, action handling code may be attached to specific buttons to define an operation to be performed, to clear a buffer or other memory associated with the calculator, to execute a previously specified operation, or the like.

To generate source code for a code-defined visual asset (e.g., one of the visual assets 222, 224, 226), an input prompt may be received for processing by a generative artificial intelligence model. The input prompt may, in some embodiments, be a natural language prompt describing a behavior to be implemented by a visual asset. In some embodiments, an input derived from user interaction with an interactive user interface element in a control panel, or inputs in any of a plurality of modalities (voice, image data, eye tracking, motion tracking, clickstream tracking, etc.). For non-textual inputs, the input prompt may be derived from user interaction with an interactive user interface element, from extracting semantic data or an intent from inputs in a non-textual modality, or the like. For example, to generate an input prompt usable by a generative artificial intelligence model to generate a code-defined visual asset, the same or a different generative artificial intelligence model can transform an intent identified from user interaction with an interactive user interface element or an input in a non-textual input modality into a textual prompt. In some embodiments, an input prompt may be generated or modified based on contextual clues embedded in the input prompt. For example, code generation engine 122 can process an input prompt that refers to the functionality of appearance of an unnamed visual asset (e.g., an input prompt specifying "this component") based on contextual clues in the canvas 205. These contextual clues may include, for example, the layer that is currently active within the design environment 200, the visual component over which a mouse cursor or other selector is positioned in the design environment 200, or the like.

Code generation engine 122 generally transforms a visual design associated with a visual asset into a code-defined visual asset by converting the visual asset to an intermediate representation that can then be used by a generative artificial intelligence model (e.g., a model implemented or deployed by code generation engine 122) to generate source code associated with a code-defined visual asset. The code generation engine 122 can generate the intermediate representation deterministically such that the resulting code-defined visual asset retains the same or similar visual design as that displayed in a design environment 200. Further, the intermediate representation may be a code representation that can be ingested by a generative artificial intelligence model as a base for which code implementing the desired functionality described in the input prompt is generated. To generate the intermediate representation, code generation engine 122 can use a series of rules to generate a source code artifact including functions defining each visual component of the visual asset. This intermediate representation may include references or other lists of external assets (e.g., images, video content, fonts, etc.) associated with the visual asset.

In some embodiments, to generate the intermediate representation, code generation engine 122 can extract a tree representation of a visual asset from the design environment 200 and traverse the tree representation. Code generation engine 122 can generate the tree representation of the visual asset may, for example, by deriving the tree representation from a document object model (DOM) representation of visual assets on the canvas 205. Generally, the tree representation may include a root node associated with a defined top-level component for the visual asset and child nodes associated with different visual components of the visual asset. For example, the root node may be a container, such as a layer in the design environment 200, and the child nodes may correspond to different visual components in the visual asset. In some embodiments, the root node may correspond to a container or other section of rendering code for a layer in the design environment, and the child nodes may correspond to containers or sections of rendering code within the layer div or section.

Within the tree representation of the visual asset, nodes in the tree may correspond to visual components, external code-defined visual assets, code-defined visual assets within a layer of the canvas 205, or the like. In generating the intermediate representation of the visual asset, the code generation engine 122 can perform intermediate code generation actions based on the type of each node in the tree. For example, code generation engine 122 generally transforms a visual component node, which may not be associated with code defining the appearance or behavior of the underlying visual component, into the intermediate representation by generating a code definition including code-defined properties generated from the component-level properties defined in the design environment 200. In another example, where a node in the tree corresponds to an external code-defined visual asset (also referred to as a code instance), code generation engine 122 generally imports the code from the external code-defined visual asset into the intermediate representation of the visual asset by referencing the external code-defined visual asset. In still another example, where a node in the tree corresponds to a code-defined visual asset in a layer on the canvas 205, code generation engine 122 can copy the code from the layer on the canvas 205 directly to the intermediate representation of the visual asset.

To generate code associated with a component in the intermediate representation of the visual asset, code generation engine 122 can serialize a visual component from a runtime language for the design environment 200 into rendering descriptions of the visual component. In some embodiments, code generation engine 122 can perform the serialization, for example, by generating a hidden area in the design environment 200, rendering the component, and obtaining the rendering code or script for the component from the hidden area in the design environment 200. In some embodiments, code generation engine 122 can perform the serialization by translating a design from an internal representation in the design environment to cross-platform rendering code (e.g., from a language used internally in the design environment to hypertext markup language (HTML) and cascading style sheets (CSS)). Code generation engine 122 can translate visual properties (e.g., in external stylesheets referenced by the rendering code or script) into executable code. Finally, code generation engine 122 can transform the rendering descriptions of the visual component into executable rendering code (e.g., in JavaScript or other executable code). In some embodiments, code generation engine 122 can also extract external assets, such as images or fonts, during the serialization process.

After code generation engine 122 generates the intermediate representation for a visual asset, code generation engine 122 uses the intermediate representation and the input prompt to generate a code artifact for the code-defined visual asset. Generally, a generative artificial intelligence model may be a large language model (as discussed above) or other language model that can generate source code from an input prompt describing the functionality to be implemented by the source code. In some embodiments, the input prompt may specify actions to be performed when various events occur within the code-defined visual asset. For example, an input prompt may specify that an action should be performed when a button is clicked, that actions should be performed on mouse-over or mouse exit, when a visual component receives or loses focus, or the like.

In some embodiments, an input prompt may specify specific components in the visual asset that are to be associated with specific triggers and/or actions to be performed in response to a specific input. Because an input prompt may not provide sufficient semantic information for the generative artificial intelligence model to use to generate code associated with the appropriate components in the visual asset, an image of the visual asset may be included as an input into the generative artificial intelligence model executed by code generation engine 122. In some embodiments, the generative artificial intelligence model can use the image of the visual asset to generate code responsive to the input prompt by using various segmentation techniques with respect to the visual asset. Generally, these segmentation techniques may segment an image of the visual asset into a plurality of segments, each respective segment corresponding to a respective visual component in the visual asset. The generative artificial intelligence model can match segments of the image of the visual asset to specific components in the intermediate representation of the visual asset to identify components for which code is to be added or edited to generate the code-defined visual asset.

In some embodiments, a code-defined visual asset, including code generated by code generation engine 122 and a visual design rendered on canvas 205, may be rendered as an interactive object in the design environment 200. In doing so, the code-defined visual asset may be associated with on-canvas and contextual annotations that describe the code-defined visual asset. These annotations may, for example, describe an overview of the behavior of the code-defined visual asset and may provide a user interface in which localized interaction with code generation engine 122 may be performed (e.g., an input panel in which input prompts for modifying the appearance and/or behavior of the code-defined visual asset may be input to invoke code generation operations performed by code generation engine 122).

In some embodiments, code generation engine 122 may operate continuously to allow for code-defined visual assets to be updated as the code-defined visual asset changes in the design environment 200. For example, code generation engine 122 may listen to or otherwise monitor for changes to the properties and/or functionality of a visual asset on the canvas 205. When code generation engine 122 detects a change to the properties and/or functionality of a visual asset, code generation engine 122 can process information about the change via the generative artificial intelligence model and generate replacement code for one or more components in the visual asset. The code generation engine 122 can then write the replacement code to the external code asset to update the code for the code-generated visual asset to reflect the updates detected to visual assets on the canvas 205.

As an illustrative example, suppose that a user is designing and modifying visual asset 222 within the design environment 200. A visual design of the visual asset 222 may be established within the design environment 200 by drawing or otherwise inserting various visual components into a layer on the canvas 205 in the design environment 200. As illustrated, the current design of the visual asset 222 includes a text block having dimensions of 276 pixels wide by 35 pixels tall, with the text in the text block being center aligned and having a bold typeface. The current design of the visual asset 222 may be associated with rendering code displayed in code panel 240. If the weight of the text block is changed from a bold typeface to a regular typeface (i.e., a typeface that does not include any modifications to weight or slant), code generation engine 122 can detect the change and trigger re-generation of the source code associated with the visual asset 222. Re-generation of the source code associated with the visual asset 222 may be performed deterministically in cases in which modifications can be applied through direct manipulation of the intermediate representation or the source code itself; in such a case, the generative artificial intelligence model need not be invoked in order to generate the source code for the updated visual asset 222. In complicated cases in which many parameters associated with the visual asset 222 change, code generation engine 122 can generate source code for the component(s) that have been modified using a generative artificial intelligence model, as discussed above, and copy the generated source code to the external code asset. Generally, in copying the generated source code to the external code asset, code generation engine 122 can replace previously generated code for specific functions with newly generated code reflecting changes to the appearance and/or functionality of a code-defined visual asset.

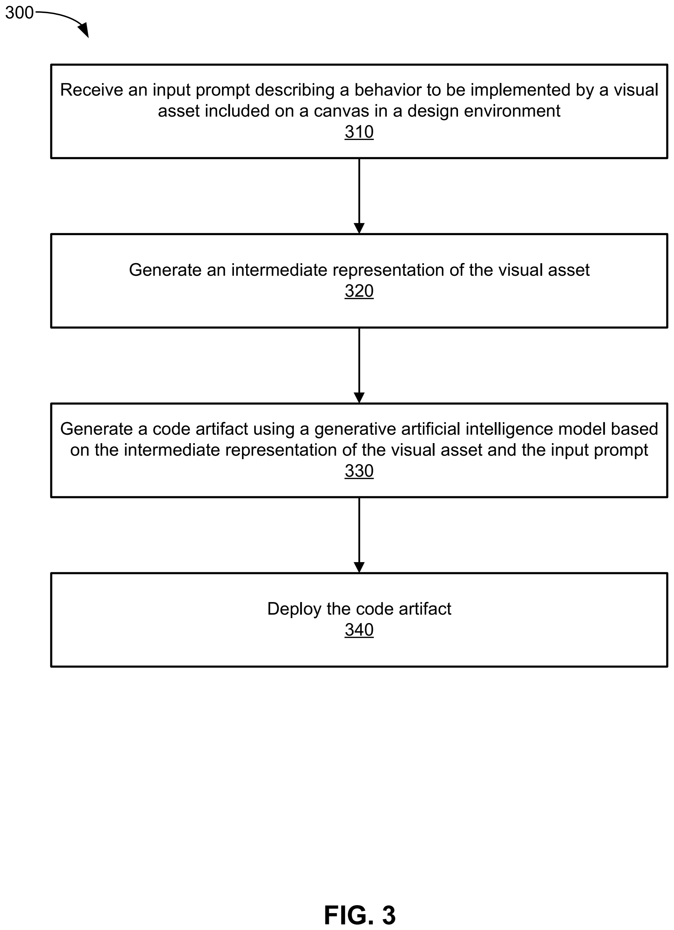

Figure 3 is a flow diagram illustrating example operations 300 for generating an external code asset for a visual asset in a design environment based on a generative artificial intelligence model, according to some embodiments. The operations 300 may be performed, for example, by a code generation engine (e.g., the code generation engine 122 illustrated in Figure 1) executing on a computing system including one or more processors, such as the processor(s) 102 of the computing device 100 illustrated in Figure 1.

As illustrated, the operations 300 begin at block 310, with the code generation engine 122 receiving an input prompt describing a behavior to be implemented by a visual asset included on a canvas in a design environment.

At block 320, the operations 300 proceed with the code generation engine 122 generating an intermediate representation of the visual asset.

In some embodiments, the visual asset is defined according to a graph data structure illustrating relationships between visual components in the visual asset. For example, the graph data structure may be a graph derived from a document object model (DOM) representation of the visual asset or other graph in which visual components are defined in terms of parent-child relationships between different components. For example, a layer or other container may be the root node of the graph, and child nodes in the graph may have a relationship based on spatial relationships between different components. Components that are independent of each other may be nodes at the same level of the graph representation, while components that are positioned within another component may be represented as child nodes of the node associated with that other component. In such an embodiment, the intermediate representation of the visual asset is generated based on traversing the graph data structure.

In some embodiments, generating the intermediate representation of the visual asset comprises deterministically generating a representation based on one or more rules associated with each type of visual component in the visual asset. For example, the rules associated with different types of visual components may include rules for generating the intermediate representation of visual components without a code definition, rules for generating the intermediate representation of visual components in a layer of a canvas in the design environment, rules for generating the intermediate representation of visual components imported as an instance in the canvas in the design environment, and the like.

In some embodiments, generating the intermediate representation of the visual asset may include generating a respective code representation for each respective visual component of the plurality of visual components in the visual asset. Generally, the respective code representation includes at least code properties defined based on corresponding properties associated with the respective visual component.

In some embodiments, generating the intermediate representation of the visual asset includes determining that the visual asset comprises a code-defined visual asset. Code defining the visual asset may be copied into the intermediate representation of the visual asset.

At block 330, the operations 300 proceed with the code generation engine 122 generating, using a generative artificial intelligence model, a code artifact based on the intermediate representation of the visual asset and the input prompt.

In some embodiments, the code artifact may be generated further based on an image of the visual asset. To do so, the image of the visual asset may be segmented into one or more segments. Each segment of the one or more segments may be associated with a visual component included in the visual asset. Based on segmenting the image of the visual asset, one or more visual components for which code implementing the behavior described in the input prompt is to be generated may be identified. Code implementing the behavior described in the input prompt for the identified one or more visual components may be generated.

At block 340, the operations 300 (optionally) proceed with deploying the code artifact.

In some embodiments, the operations 300 may further include receiving an update to one or more properties of the visual asset. The update to the one or more properties of the visual asset may be received based on monitoring for changes to the visual asset in the design environment. These changes may include, for example, changes to properties via a control panel defining the appearance of a visual asset, changes to properties via changes made directly to the visual asset on a canvas in the design environment, or the like. Based on the received update, the code artifact may be updated.

In some embodiments, the intermediate representation of the visual asset comprises code in the same language as the code artifact. The intermediate representation may, in such an embodiment, represent a container into which functional code may be inserted. The functional code may, for example, reference code in the intermediate representation generated for the various components of the visual asset.

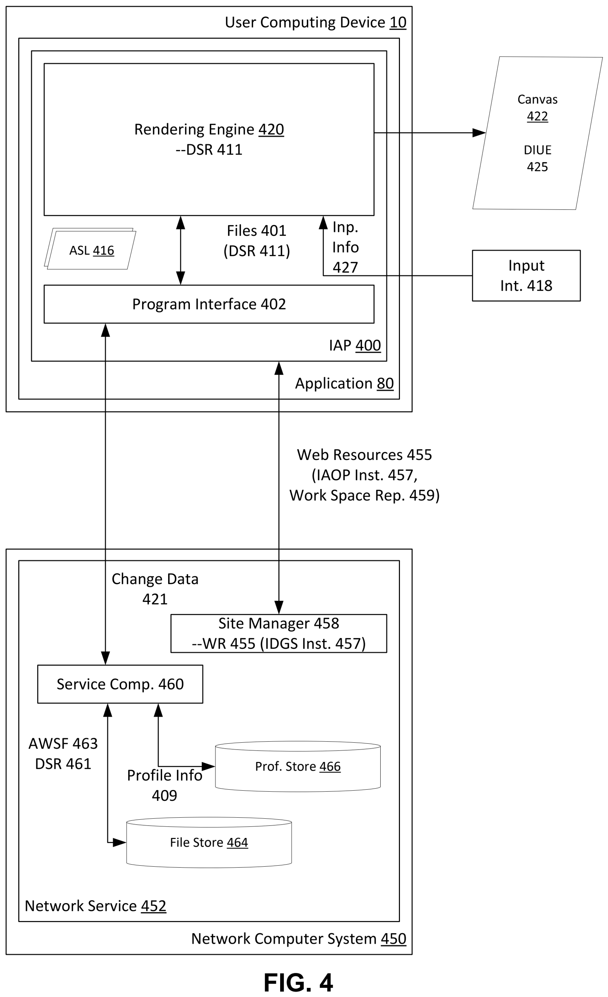

Figure 4 illustrates a network computing system to implement an interactive application platform on a user computing device, according to some embodiments. A network computing system such as illustrated in Figure 4 can be implemented using one or more servers which communicate with user computing devices over one or more networks. The network computer system 450 illustrated in Figure 4 may correspond, for example, to the computing device 100 illustrated in Figure 1 and can be used to generate and/or modify visual content based on generative artificial intelligence models and an input prompt specifying a design objective for the visual content.

In some embodiments, the network computing system 450 performs operations to enable an interactive application platform ("IAP 400") to be implemented on user computing devices 10. In some embodiments, the IAP 400 can be implemented by the user initiating a session (e.g., user accessing a website) to receive programmatic resources of the IAP 400. A browser component executes the programmatic resources to implement the IAP 400, with functionality to receive user input and to render content that is based on or responsive to user input. As described, the IAP 400 is implemented to enable the user to create various types of content, such as interactive graphic designs, art, whiteboard content, program code renderings, presentations, and/or textual content. As further described, the IAP 400 can include logic ("ASL 416") for implementing one or more application services, where each application service is implemented through the IAP 400 to provide a corresponding set of functionality and user experience. The IAP 400 also implements the application services to share some resources, such as the canvas, workspace file or library of design elements. Further, the IAP 400 enables multiple application services to be used during a given online session and/or with respect to a particular application service.

According to some embodiments, a user of computing device 10 operates web-based application 80 to access a network site, where programmatic resources are retrieved and executed to implement the IAP 400. The web-based application 80 can execute scripts, code and/or other logic (the "programmatic components") to implement functionality of the IAP 400. In some embodiments, the web-based application 80 can correspond to a commercially available browser, such as GOOGLE CHROME (developed by GOOGLE, INC.) or SAFARI (developed by APPLE, INC.). In some embodiments, the processes of the IAP 400 can be implemented as scripts and/or other embedded code which web-based application 80 downloads from a network site. For example, the web-based application 80 can execute code that is embedded within a webpage to implement processes of the IAP 400. The web-based application 80 can also execute the scripts to retrieve other scripts and programmatic resources (e.g., libraries) from the network site and/or other local or remote locations. By way of example, the web-based application 80 may execute JAVASCRIPT embedded in an HTML resource (e.g., web-page structured in accordance with HTML 5.0 or other versions, as provided under standards published by W3C or WHATWG consortiums). In some embodiments, the rendering engine 420 may utilize graphics processing unit (GPU) accelerated logic, such as provided through WebGL (Web Graphics Library) programs which execute Graphics Library Shader Language (GLSL) programs that execute on GPUs.

The IAP 400 can be implemented as part of a network service, where web-based application 80 communicates with one or more remote computers (e.g., server used for a network service) to execute processes of the IAP 400. The web-based application 80 retrieves some or all of the programmatic resources for implementing the IAP 400 from a network site. The web-based application 80 may also access various types of data sets in providing the IAP 400. The data sets can correspond to files and design libraries (e.g., predesigned design elements), which can be stored remotely (e.g., on a server, in association with an account) or locally. In some embodiments, the network computer system 450 provides a shared design library which the user computing device 10 can use with any of the application services provided through the IAP 400. In this way, the user may initiate a session to implement the IAP 400 for the purpose of creating or editing the workspace file, as rendered on the canvas 422, in accordance with one of multiple collaborative application services of the IAP 400.

In some embodiments, the IAP 400 includes a program interface 402, an input interface 418 and a rendering engine 420. The program interface 42 can include one or more processes which execute to access and retrieve programmatic resources from local and/or remote sources. In an implementation, the program interface 402 can generate, for example, a canvas 422, using programmatic resources which are associated with web-based application 80 (e.g., HTML 5.0 canvas). As an addition or variation, the program interface 402 can trigger or otherwise cause the canvas 422 to be generated using programmatic resources and data sets (e.g., canvas parameters) which are retrieved from local (e.g., memory) or remote sources (e.g., from network service).

The program interface 402 may also retrieve programmatic resources that include an application framework for use with canvas 422. The application framework can include data sets which define or configure, for example, a set of interactive graphic tools that integrate with the canvas 422 and which comprise the input interface 418, to enable the user to provide input to generate or update content rendered on the canvas 422.

According to some embodiments, the input interface 418 can be implemented as a functional layer that is integrated with the canvas 422 to detect and interpret user input. The input interface 418 can, for example, process a user's interaction with an input mechanism (e.g., pointer device, keyboard) of the user computing device, to detect, for example, cursor positioning/movement with respect to the canvas 422, hover input (e.g., pre-selection input), selection input (e.g., clicks or double clicks), shortcuts (e.g., key board inputs) and other inputs. In processing a user's interaction with a pointer device, the input interface 418 can use a reference of the canvas 422 to identify a screen location of a user's cursor as the user moves or otherwise interacts with the pointer device. Additionally, the input interface 418 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In some embodiments, the input interface 418 can interpret, for example, a series of inputs as a design tool selection (e.g., shape selection based on location of input), as well as inputs to define attributes (e.g., dimensions) of a selected shape. In some embodiments, the input interface 418 can interpret a continuous input (corresponding to a continuous movement of the user's pointer device) as selecting a tool (e.g., shape too) and canvas location where an output of the selected tool is to appear.

In some embodiments, the IAP 400 includes application service logic 416 to enable multiple application services to be utilized during a given user session, where each application service provides the user with a particular functionality and/or user experience. As described by some embodiments, each application service is implemented by the IAP 400 utilizing a corresponding application service logic 416 to configure the interface component 418, rendering engine 420 and/or other components of the IAP 400 to provide the functionality and user experience of the corresponding application service. In this way, the IAP 400 enables the user to operate multiple application services during one online session. Further, the different application services can share resources, including programmatic resources of the IAP 400, such as canvas 422. In this way, each application service can contribute content to and/or utilize features and content provided with the canvas 422 during a given session. Still further, the application services can be implemented as alternative modalities of IAP 400, such that the user can toggle between modes, where each mode provides a particular functionality and user experience. In some embodiments, each application service can utilize a common workspace file associated with the user. By default, a computing device that opens the workspace file can utilize a default application service to access and/or update that workspace file. The user may also switch the mode of operation of the IAP 400 to utilize a different application service to access, use and/or update the workspace file.

The network computing system 450 can include a site manager 458 to manage a website where a set of web-resources 455 (e.g., web page) are made available for the web-based application 80 of user computing devices 10. The web-resources 455 can include instructions, such as scripts or other logic ("ICAP instructions 457"), which are executable by browsers or web components of user computing devices. The web resources 455 can also include (i) resources that are to be shared as between application services, provided to the user computing devices in connection with the user computing devices utilizing either of the application services, and (ii) application specific resources, which execute on the user computing devices for a particular one of the available application services. The web resources 455 can also include a design library of design elements that is partially or fully shared as between the application services. The library of design elements can enable the user to select predetermined design elements for use on the canvas 422 in connection with the user utilizing either of the application services.

In some variations, once the computing device 10 accesses and downloads the web-resources 455, web-based application 80 executes the IAP instructions 457 to implement functionality as described above. For example, the IAP instructions 457 can be executed by web-based application 80 to initiate the program interface 402 on the user computing device 10. The initiation of the program interface 402 may coincide with the establishment of, for example, a web-socket connection between the program interface 402 and a service component 460 of the network computing system 450.

In some embodiments, the web-resources 455 includes logic which web-based application 80 executes to initiate one or more processes of a program interface 402, causing the IAP 400 to retrieve additional programmatic resources and data sets for implementing functionality as described by examples. The web resources 455 can, for example, embed logic (e.g., JAVASCRIPT code), including GPU accelerated logic, in an HTML page for download by computing devices of users. The program interface 402 can be triggered to retrieve additional programmatic resources and data sets from, for example, the network service 452, and/or from local resources of the computing device 10, in order to implement each of the multiple application services of the IAP 400. For example, some of the components of the IAP 400 can be implemented through webpages that can be downloaded onto the computing device 10 after authentication is performed, and/or once the user performs additional actions (e.g., download one or more pages of the workspace associated with the account identifier). Accordingly, in examples as described, the network computing system 450 can communicate the IAP instructions 457 to the computing device 10 through a combination of network communications, including through downloading activity of web-based application 80, where the IAP instructions 457 are received and executed by web-based application 80.

The computing device 10 can use web-based application 80 to access a website of the network service 452 to download the webpage or web resource. Upon accessing the website, web-based application 80 can automatically (e.g., through saved credentials) or through manual input, communicate an account identifier to the service component 460. In some embodiments, web-based application 80 can also communicate one or more additional identifiers that correlate to a user identifier.

Additionally, in some embodiments, the service component 460 can use the user or account identifier of the user identifier to retrieve profile information 409 from a user profile store 466. As an addition or variation, profile information 409 for the user can be determined and stored locally on the user's computing device 10.

The service component 460 can also retrieve the files of an active workspace ("active workspace files 463") that are linked to the user account or identifier from a file store 464. The profile store 466 can also identify the workspace that is identified with the account and/or user, and the file store 464 can store the data sets that comprise the workspace. The data sets stored with the file store 464 can include, for example, the pages of a workspace and one or more data structure representations 461 for the design under edit which is renderable from the respective active workspace files.

As an addition or variation, each file can be associated with metadata that identifies the application service that was used to create the particular file. In some embodiments, the metadata identifies the default application service for viewing, utilizing or otherwise updating the application service.

Additionally, in some embodiments, the service component 460 provides a representation 459 of the workspace associated with the user to the web-based application 80, where the representation identifies, for example, individual files associated with the user and/or user account. The workspace representation 459 can also identify a set of files, where each file includes one or multiple pages, and each page including objects that are part of a design interface.

On the user device 10, the user can view the workspace representation through web-based application 80, and the user can elect to open a file of the workspace through web-based application 80. In some embodiments, upon the user electing to open one of the active workspace files 463, web-based application 80 initiates the canvas 422. For example, the IAP 40 can initiate an HTML 5.0 canvas as a component of web-based application 80, and the rendering engine 120 can access one or more data structures representations 411 of content rendered on the canvas 422.

The IAP 400 utilizes application service logic 416 to implement multiple modes of operation, where each mode corresponds to an application service. As described, the application service logic 416 associated with each service application can include instructions and data for configuring the components of IAP 400 to include functionality and features of the corresponding application service. Accordingly, the application service logic 416 can, for example, configure the application framework and/or input interface 418 to differ in form, functionality and/or configuration as between the alternative modes of the IAP 400. Additionally, the type of actions and interactions which the user can perform to register input can vary based on the modes of operation. Still further, the different modes of operation can include different input or user-interface features for the user to select and use for inclusion on the canvas 422. By way of example, when the IAP 400 is operating in a mode for whiteboarding service application, the program interface 402 can provide input features to enable a user to select a design element that is in the form of a "sticky note," while in an alternative mode for an interactive graphic design service application, the "sticky note feature" is not available. However, in the alternative mode, the user may be able to select anyone of numerous possible shapes or previously designed objects which the user can write textual messages in for display on the canvas 422.

Additionally, the application service logic 416 can configure the operation of the rendering engine 420, such that the functionality and behavior of the rendering engine 420 differs as between different application services. In this way, the rendering engine 420 functions to provide alternative behaviors for different modes of operation, coinciding with the particular service application that is active. By way of example, the configuration of the rendering engine 420 can affect the appearance of the canvas 422, the appearance (e.g., visual attributes) of rendered content elements on the canvas 422, the behavior or representation of user interaction (e.g., whether the user cursor or pointe device is represented on the canvas 422), the type or specific content that is rendered, the physic engine that is used by the rendering engine to represent dynamic events (e.g., the object being moved), what user operations can be performed (e.g., whether select objects can be resized), and the like.

Additionally, each of the application services can utilize a shared library of content elements (e.g., graphic design element), as well as core functionality that enables design elements to be shared and updated between the different application services that are available through the platform. Additionally, the workspace file created and edited through use of one application service can be utilized with the other application service. Moreover, the transition between application services can be seamless-for example, the user computing device 10 can open a workspace file using the first application service (e.g., interactive graphic design application service for UIX design) then seamlessly switch to using the second application service (e.g., whiteboarding application service) with the same file, without closing the workspace file. In some embodiments, each application service enables the user to update the workspace file even while the workspace file is in use by other computing devices (e.g., such as in a collaborative environment). In some embodiments, the user can mode switch the IAP 400 to switch which application service is in use, with each application service utilizing the workspace file.

### Example Clauses

Various aspects of the present disclosure are described in the following numbered clauses.
1. A processor-implemented method, comprising: receiving an input prompt describing a behavior to be implemented by a visual asset included on a canvas in a design environment; generating an intermediate representation of the visual asset; and generating, using a generative artificial intelligence model, a code artifact based on the intermediate representation of the visual asset and the input prompt.
2. The method of clause 1, wherein: the visual asset is defined according to a graph data structure illustrating relationships between visual components in the visual asset; and the intermediate representation of the visual asset is generated based on traversing the graph data structure.
3. The method of clause 2, wherein generating the intermediate representation of the visual asset comprises deterministically generating a representation based on one or more rules associated with each type of visual component in the visual asset.
4. The method of any of clauses 2 or 3, wherein generating the intermediate representation of the visual asset comprises generating a respective code representation for each respective visual component of the plurality of visual components in the visual asset, the respective code representation including code properties defined based on corresponding properties associated with the respective visual component.
5. The method of any of clauses 1 through 4, wherein generating the intermediate representation of the visual asset comprises: determining that the visual asset comprises a code-defined visual asset; and copying code defining the visual asset into the intermediate representation of the visual asset.
6. The method of any of clauses 1 through 5, wherein the code artifact is generated further based on an image of the visual asset.
7. The method of clause 6, wherein generating the code artifact comprises: segmenting the image of the visual asset into one or more segments, each segment of the one or more segments being associated with a visual component included in the visual asset; identifying, based on segmenting the image of the visual asset, one or more visual components for which code implementing the behavior described in the input prompt is to be generated; and generating code implementing the behavior described in the input prompt for the identified one or more visual components.
8. The method of any of clauses 1 through 7, further comprising: receiving an update to one or more properties of the visual asset; and updating the code artifact based on the received update to the one or more properties of the visual asset.
9. The method of any of clauses 1 through 8, wherein the intermediate representation of the visual asset comprises code in a same language as the code artifact.
10. A processing system, comprising: at least one memory having executable instructions thereon; and one or more processors configured to execute the executable instructions to cause the processing system to perform the method of any of clauses 1 through 9.
11. A processing system, comprising: means for performing the method of any of clauses 1 through 9.
12. A non-transitory computer-readable medium having executable instructions stored thereon which, when processed by one or more processors, causes the one or more processors to perform the method of any of clauses 1 through 9.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A processor-implemented method, comprising:
receiving an input prompt describing a behavior to be implemented by a visual asset included on a canvas in a design environment;
generating an intermediate representation of the visual asset; and
generating, using a generative artificial intelligence model, a code artifact based on the intermediate representation of the visual asset and the input prompt.

2. The method of claim 1, wherein:
the visual asset is defined according to a graph data structure illustrating relationships between visual components in the visual asset; and
the intermediate representation of the visual asset is generated based on traversing the graph data structure.

3. The method of claim 2, wherein generating the intermediate representation of the visual asset comprises deterministically generating a representation based on one or more rules associated with each type of visual component in the visual asset.

4. The method of claim 2 or 3, wherein generating the intermediate representation of the visual asset comprises generating a respective code representation for each respective visual component of the visual components in the visual asset, the respective code representation including code properties defined based on corresponding properties associated with the respective visual component.

5. The method of any preceding claim, wherein generating the intermediate representation of the visual asset comprises:
determining that the visual asset comprises a code-defined visual asset; and
copying code defining the visual asset into the intermediate representation of the visual asset.

6. The method of any preceding claim, wherein the code artifact is generated further based on an image of the visual asset.

7. The method of claim 6, wherein generating the code artifact comprises:
segmenting the image of the visual asset into one or more segments, each segment of the one or more segments being associated with a visual component included in the visual asset;
identifying, based on segmenting the image of the visual asset, one or more visual components for which code implementing the behavior described in the input prompt is to be generated; and
generating code implementing the behavior described in the input prompt for the identified one or more visual components.

8. The method of any preceding claim, further comprising:
receiving an update to one or more properties of the visual asset; and
updating the code artifact based on the received update to the one or more properties of the visual asset.

9. The method of any preceding claim, wherein the intermediate representation of the visual asset comprises code in a same language as the code artifact.

10. A processing system, comprising:
at least one memory having executable instructions stored thereon; and
one or more processors configured to execute the executable instructions to cause the processing system to perform the method of any preceding claim.

11. A computer-readable medium having executable instructions stored thereon which, when processed by one or more processors, causes the one or more processors to perform the method of any of claims 1 to 9.
